# EUROPÄISCHE PATENTSCHRIFT

(11) **EP 3 012 572 B1**
(45) Veröffentlichungstag und Bekanntmachung des Hinweises auf die Patenterteilung: **30.11.2016**
(21) Anmeldenummer: 14189899.9
(22) Anmeldetag: 22.10.2014
(51) Int. Cl.: F41H 11/136, G01V 3/15

(54) **SUCHGERÄT MIT TELESKOPIERBARER TRAGSTANGE UND KLAPPBARER ARMSCHALE**
DETECTOR WITH TELESCOPIC CARRIER ROD AND FOLDABLE ARM REST
DÉTECTEUR AVEC UNE CANE TÉLESCOPIQUE ET UN REPOSE-BRAS RABATABLE

(43) Veröffentlichungstag der Anmeldung: 27.04.2016
(73) Patentinhaber: Vallon GmbH, 72800 Eningen (DE)
(72) Erfinder: Andel, Benjamin, 72072 Tübingen (DE)
(74) Vertreter: Klocke, Peter

(56) Entgegenhaltungen:
- EP-A1- 0 884 609
- DE-U1-202012 104 609
- US-S1- D 652 330

## Beschreibung

Die Erfindung betrifft ein Suchgerät mit einem teleskopierbaren Tragrohr, mit mindestens einem vorderen Rohrteil und einem hinteren Rohrteil, wobei vorne an dem vorderen Rohrteil eine Messsonde schwenkbar befestigt ist und an dem hinteren Rohrteil eine Elektronikeinheit mit Batteriefach, ein Griffteil und axial davon nach hinten beabstandet eine U-förmige Armschale angeordnet sind, und wobei die Armschale gegenüber dem Griffteil axial verschiebbar ist und zwei Armschalenteile mit jeweils einem Armanlageflügel aufweist, die seitlich an einem Führungsschlitten in Querrichtung des Tragrohrs schwenkbeweglich gelagert angeordnet sind, der von einer an einem hinteren Rohrende des hinteren Rohrteils befestigten, sich in Längsrichtung des Tragrohrs erstreckenden Führungsschiene axial verschiebbar getragen ist.

Ein gattungsgemäßes Suchgerät ist beispielsweise aus der US D652,330 S bekannt. Bei diesem Suchgerät ist die Führungsschiene als Rundstab ausgebildet, der von zwei Spannklemmen gehalten ist, die an einem schwenkbar mit dem hinteren Rohrende des hinteren Rohrteils verbundenen Batteriefach angeordnet sind. Die Führungsschiene erstreckt sich über die gesamte Länge des Batteriefaches. Sie ist durch einen der Spannklemmen in einen vorderen und einen hinteren Schienenabschnitt unterteilt. Der hintere, dem Tragrohr abgewandte Schienenabschnitt führt den Führungsschlitten mit der Armschale. An dem
vorderen, dem Tragrohr zugewandten Schienenabschnitt ist ein weiterer Führungsschlitten angeordnet, der das Griffteil trägt, wobei das Griffteil in Längsrichtung des Tragrohrs schwenkbar an diesem zweiten Führungsschlitten gelagert ist. Die beiden Führungsschlitten stützen sich mit ihrer Unterseite flächig auf dem Batteriefach ab, so dass eine seitliche Bewegung der beiden Schlitten in Umfangsrichtung der zylinderförmigen Führungsschiene ausgeschlossen ist. Die beiden Führungsschlitten sowie das Batteriefach weisen einander zugeordnete Rastelemente auf, über die die Schlitten an vorgesehenen Stellen der Führungsschiene lösbar befestigbar sind. Die beiden an dem hinteren Führungsschlitten schwenkbeweglich angeordneten Armanlageflügel sind zweiteilig ausgebildet. Ein erstes der beiden Flügelteile ist über ein Gelenk mit dem Führungsschlitten und das andere zweite Flügelteil über ein Scharnier mit dem ersten Flügelteil verbunden. Beide Flügelteile sind somit orthogonal zum Tragrohr frei beweglich und können beliebig voneinander weg und aufeinander zu geschwenkt werden. Zur Fixierung der vier die Armschale bildenden Flügelteile ist ein Spannriemen vorgesehen, der durch Ausnehmungen der beiden Armanlageflügel sowie des Schlittens geführt ist. Mit Hilfe dieses Spannriemens können die beiden Armanlageflügel an dem Unterarm eines Benutzers des Suchgerätes in Anlage gehalten werden. Das Batteriefach, auf dem die Führungsschiene angeordnet ist, ist an das hintere Rohrende des hinteren Rohrteils des Tragrohres angelenkt. Das bekannte Suchgerät kann von einer längs gestreckten Gebrauchsstellung zum Detektieren von Gegenständen in eine gefaltete raumsparende Nichtgebrauchsstellung zum Transport oder zur Lagerung, und umgekehrt, überführt werden. In der kompakten Nichtgebrauchsstellung sind die Rohrteile des teleskopierbaren Tragrohrs ineinander geschoben und das Tragrohr somit verkürzt. In dieser Stellung ist zudem die Messsonde und das Batteriefach, die jeweils über ein Schwenkgelenk mit dem vorderen bzw. hinteren Rohrteil des Tragrohrs verbunden sind, gegen das Tragrohr geschwenkt und erstrecken sich an diesem parallel anliegend. In der Gebrauchsstellung des Suchgerätes stehen dabei die Armanlageflügel seitlich von dem Batteriefach in einer Arbeitsstellung ab, während diese in der Nichtgebrauchsstellung des Suchgerätes gefaltet an dem Batteriefach in einer Ruhestellung in Anlage sind.

Unvorteilhaft erscheint bei diesem bekannten Suchgerät, dass die beiden Armanlageflügel sowohl in der Ruhestellung als auch in der Arbeitsstellung frei beweglich sind, von Hand in die jeweilige Stellung gebracht und mittels des Spannriemens in diesen Stellungen gehalten werden müssen. Dies ist für den Benutzer beschwerlich und unkomfortabel. Nachteilig ist außerdem, dass die Führungsschiene eine runde Querschnittsform aufweist, die eine Abstützung des zugeordneten Führungsschlittens auf dem Batteriegehäuse erforderlich macht, damit dieser sich nicht in Umfangsrichtung der Führungsschiene verdreht.

Zum Stand der Technik wird weiterhin auf die Druckschrift EP 0 884 609 A1 verwiesen. Diese lehrt ein Metalldetektorgestänge mit einer Halterung, die eine Elektronik, einen Handgriff und eine Armschale umfasst und die wenigstens teilweise entlang dem Tragrohr bewegbar und an diesem verdrehsicher arretierbar ist. Die Halterung besteht im Wesentlichen aus einem Gehäuse, das eine Durchführung aufweist, in der das Tragrohr bei der Bewegung der Haltung geführt ist. Die Armschale, die zwei Armschalenteile mit je einem Armanlageflügel umfasst, ist an das Gehäuse angeformt. Die Verdrehsicherung wird mittels einer in Längsrichtung der Durchführung verlaufenden Nut/Federverbindung in der Durchführung gewährleistet. Dabei ist das Tragrohr als Teleskoptragrohr ausgebildet, das aus mehreren ineinander schiebbaren Teleskopteilen besteht und in der gewünschten Länge einstellbar ist.

Der Erfindung liegt die Aufgabe zu Grunde, den vorstehend genannten Stand der Technik dahingehend zu verbessern, dass eine einfacher und benutzerfreundlicher Wechsel zwischen der Gebrauchsstellung und der Nichtgebrauchsstellung des Suchgerätes möglich ist, wobei insbesondere die axiale Verschiebbarkeit der Armschale gegenüber dem Griffteil und die Überführung der Armanlageflügel von der Arbeitsstellung in die Ruhestellung, und umgekehrt, verbessert werden soll.

Diese Aufgabe wird erfindungsgemäß durch ein Suchgerät mit den Merkmalen des Anspruchs 1 gelöst. Weitere vorteilhafte Ausgestaltungen sind den rückbezogenen Patentansprüchen zu entnehmen.

Danach weisen bei dem erfindungsgemäßen Suchgerät die beiden von dem Führungsschlitten getragenen Armschalenteile je einen Armanlageflügel mit einem Flügelfortsatz auf, über den die Armschalenteile an dem Führungsschlitten seitlich beweglich befestigt sind. Dabei sind die Armschalenteile jeweils einstückig und biegesteif ausgebildet. Sie sind beispielsweise als Spritzgießteil aus einem Kunststoffmaterial gefertigt, so dass der den Armanlageflügel verlängernde Flügelfortsatz einfach in direkter Weise an den Armanlageflügel angeformt werden kann. Erfindungsgemäß ist außerdem vorgesehen, dass die Führungsschiene eine Querschnittsform mit zwei seitlichen Schienenlängsseiten und der Führungsschlitten zwei seitliche Schlittenlängsseiten aufweist, die sich jeweils in Längsrichtung des Tragrohres erstrecken und aneinander in Anlage sind, wobei die Schlittenlängsseiten zumindest eine Längsnut zur Aufnahme der Schienenlängsseiten der Führungsschienen aufweisen. Dabei ist die Querschnittsform der Führungsschiene unrund, d.h. mehreckig, beispielsweise rechteckig, oder oval ausgebildet. Damit ist der Führungsschlitten sicher an der Führungsschiene axial verschiebbar geführt, wobei auch sichergestellt ist, dass der Führungsschlitten mit den zwei daran angeordneten Armanlageflügeln nicht in Umfangsrichtung des hinteren Rohrteils des Tragrohres verdrehbar ist. Gemäß der Erfindung ist zudem der Führungsschlitten an der Führungsschiene mittels der Armschalenteile an verschiedenen Stellen lösbar fixierbar. Dabei sind die beiden Armschalenteile jeweils mit ihren Flügelfortsätzen, um eine begrenzten Schwenkwinkel schwenkbar, beweglich an dem Führungsschlitten befestigt. Sie sind dabei in Längsrichtung des Führungsschlittens axial unverrückbar angeordnet.

Die Verriegelung des Führungsschlittens mit der Führungsschiene erfolgt vorzugsweise an mindestens zwei, vorzugsweise mehr als zwei Stellen der Führungsschiene, so dass der Abstand der Armschale gegenüber dem Griffteil in Stufen verstellbar ist. Dies ermöglicht eine einfache ergonomische Anpassung des Suchgerätes an die Unterarmlänge des Benutzers. Somit stehen mehrere Arbeitspositionen für die Armschale zur Verfügung, die frei wählbar sind. Weiterhin ist neben den Arbeitsstellungen auch eine spezielle Ruhestellung vorgesehen. In der Ruhestellung befindet sich der Führungsschlitten nahe dem Griffteil, in den Arbeitsstellungen weiter von diesem entfernt, das heißt in einem mittleren bis hinteren Bereich der Führungsschiene. Zum Verschieben des Führungsschlittens gegenüber der Führungsschiene, das heißt beim Wechseln von einer Arbeitsstellung zur anderen oder zur Ruhestellung muss mindestens eines der beiden Armschalenteile, vorzugsweise beide Armschalenteile seitlich verschwenkt werden, um die Verriegelung zwischen dem Führungsschlitten und der Führungsschiene zu lösen. Die Fixierung des Führungsschlittens an der Führungsschiene kann abhängig von der technischen Ausgestaltung erfolgen, indem mindestens einer der beiden Armanlageflügel in Richtung des anderen oder in entgegengesetzter Richtung geschwenkt, das heißt der Zwischenraum zwischen den Armanlageflügeln verkleinert oder vergrößert wird. Vorzugsweise erfolgt die Fixierung des Führungsschlittens an beiden Schlittenlängsseiten. Die Verriegeln des Führungsschlitten an der Führungsschiene erfolgt in jedem Fall über die Flügelfortsätze der Armschalenteile, über die die Armanlageflügel an dem Führungsschlitten befestigt sind. Dazu sind spezielle Rastmittel an den Flügelfortsätzen und korrespondierend ausgebildete Gegenrastmittel an der Führungsschiene angeordnet, wobei die Rastmittel durch Bewegen der Armanlageflügel in Eingriff oder außer Eingriff mit den Gegenrastmitteln bringbar sind. Dabei können zusätzliche Fixiermittel an der Führungsschiene, dem Führungsschlitten und/oder den Armanlageflügeln vorgesehen sein, die die Flügelfortsätze in Schwenkrichtung lösbar fixieren, wenn die Rastmittel in und/oder außer Eingriff sind.

Vorzugsweise sind die beiden Armschalenteile mittels mindestens einer Feder kraftbeaufschlagt, die die Armanlageflügel spreizt. Die Feder wirkt insbesondere auf die Flügelfortsätze der Armanlageflügel ein. Als Feder kann prinzipiell jede Federart verwendet werden, beispielsweise eine Druck-, Zug- oder Torsionsfeder in flacher, gewickelter oder gewundener Form geeigneter Größe. Bevorzugt wird eine auf die Armschalenteile einwirkende Feder, die als gewundene Torsionsfeder ausgebildet ist.

Bei einer bevorzugten Ausführungsform der Erfindung weisen die Schienenlängsseiten eine Anzahl von ersten Verriegelungsquernuten auf, die schmaler als oder gleich breit wie die Flügelfortsätze ausgebildet sind, wobei an den Flügelfortsätzen jeweils zumindest ein diesen Verriegelungsquernuten zugeordneter Rastvorsprung angeordnet ist. Die Rastvorsprünge und die ersten Verriegelungsquernuten verriegeln bei Eingriff ineinander den Führungsschlitten mit der Führungsschiene lösbar, wobei neben und/oder in den ersten Verriegelungsquernuten Bewegungsanschläge als Stopper für die Armschalenteile angeordnet sind, die den Schwenkwinkel der Armschalenteile begrenzen und ein Umklappen der Armanlageflügel in die entgegengesetzte Richtung in Richtung der Führungsschiene verhindern. Vorzugsweise sind an den Flügelfortsätzen jeweils zwei Rastvorsprünge angeordnet, die gleichzeitig in zwei der ersten Verriegelungsnuten der Führungsschiene bei mit der Führungsschiene verriegeltem Führungsschlitten eingreifen. Die ersten Verriegelungsnuten weisen vorzugsweise einen identischen Abstand zueinander auf, so dass der Führungsschlitten schrittweise um den gleichen Weg auf der Führungsschiene verschoben werden kann. Dabei entspricht der Abstand von benachbarten derartigen Verriegelungsnuten zueinander idealerweise, insbesondere dann wenn an den Flügelfortsätzen zwei Rastvorsprünge vorgesehen sind, dem axialen Abstand dieser Rastvorsprünge zueinander. Sind die ersten Verriegelungsquernuten schmaler ausgeführt als der jeweilige Flügelfortsatz, so können die Bewegungsanschläge an der Führungsschiene links und/oder rechts von den Verriegelungsquernuten und/oder in den Verriegelungsquernuten angeordnet sein. Im andern Fall, d.h. wenn die Verriegelungsquernuten gleich breit wie der jeweilige Flügelfortsatz ausgeführt sind, so sind die Bewegungsanschläge an der Führungsschiene jeweils nur in den Verriegelungsquernuten angeordnet. Die axiale Breite der Rastvorsprünge ist insbesondere an die Breite der ersten Verriegelungsquernuten angepasst, sodass die Armschalenteile durch die Rastvorsprünge, wenn diese in die Verriegelungsquernuten eingreifen, in axialer Richtung unverrückbar an der Führungsschiene festgelegt sind. Die Bewegungsanschläge können in beliebiger geeigneter axialer Breite ausgebildet sein. Sie können auf den jeweiligen Flügelfortsatz im Bereich oder neben dem Bereich mit dem mindestens einen Rastvorsprung einwirken.

Bei einer begünstigten Ausführungsform der Erfindung ist vorgesehen, dass die Schienenlängsseiten außer den mehreren ersten Verriegelungsnuten je eine anders geformte zweite Verriegelungsquernut aufweisen, die gleich oder breiter als die Flügelfortsätze ausgebildet sind, wobei der Schwenkwinkel der Armschalenteile nicht durch Bewegungsanschläge begrenzt ist, so dass die Armschalenteile in die entgegengesetzte Richtung umklappbar sind, und wobei die Flügelfortsätze bei Eingriff in diese zweiten Verriegelungsquernuten der Führungsschiene den Führungsschlitten axial an der Führungsschiene verriegeln.

Die bei einer Ausführungsform der Erfindung für jedes Armschalenteil vorgesehene mindestens eine Feder, die auf die Armschalenteile einwirkt, hält in der Arbeitsstellung die Rastvorsprünge in Eingriff in den schmaler als die Flügelfortsätze ausgebildeten ersten Verriegelungsquernuten und in der Ruhestellung die Flügelfortsätze in Eingriff mit den gleich oder breiter als die Flügelfortsätze ausgebildeten zweiten Verriegelungsquernuten. Dabei sind die Armanlageflügel jeweils in definierten Positionen gegenüber dem Führungsschlitten angeordnet. In den verschiedenen Arbeitsstellungen bilden sie die U-förmige Armschale, wobei sich die Armanlageflügel im Wesentlichen in die gleiche Richtung erstrecken wie das seitlich von dem hinteren Rohrteil abstehende Griffteil. In der Ruhestellung, in der die Armschalenteile gegenüber der Arbeitsstellung umgeklappt sind, erstrecken sich die beiden Armanlageflügel im Wesentlichen in die entgegengesetzte Richtung des abstehenden Griffteils. Dabei wird ein typischer Schwenkwinkel der Armschalenteile um die 180 Grad erreicht. Der tatsächliche Schwenkwinkel kann davon jedoch mehr oder weniger Winkelgrade abweichen, da er von dem Winkel abhängig ist, in dem sich die Armanlageflügel in der Arbeitsstellung gegenüber dem Führungsschlitten erstrecken. In der der Arbeitsstellung gegenüberliegenden Ruhestellung erstrecken sich die Armanlageflügel in etwa orthogonal zu dem Führungsschlitten.

Bei einer Ausführungsform des erfindungsgemäßen Suchgerätes weist die Führungsschiene an den Schienenlängsseiten seitlich mindestens einen Längssteg auf, der der mindestens einen an den Schlittenlängsseiten vorgesehenen Längsnut des Führungsschlittens zugeordnet ist. Dabei sind die Verriegelungsquernuten und/oder die Bewegungsanschläge an dem Längssteg ausgebildet. Der Führungsschlitten kann somit nach einem Nut-Feder-System in Längsrichtung der Führungsschiene verschoben werden, wobei die Lage der Armschale wählbar ist.

Bei einer bevorzugten Ausführungsform der Erfindung ist an dem hinteren Rohrende des hinteren Rohrteils ein Lagerbock befestigt, mit dem die Führungsschiene mit einem zum Tragrohr weisenden vorderen Schienenende und/oder das Griffteil mit einem zum Tragrohr weisenden hinteren Griffende gelenkig verbunden ist. Die jeweilige Verbindung kann direkt oder indirekt sein. Damit sind sowohl das Griffteil wie auch die Armschale unabhängig voneinander verschwenkbar gelagert. Das Griffteil kann in Richtung des hinteren Rohrteils des teleskopierbaren Tragrohrs vorzugsweise so weit umgeklappt werden, dass es an dem Tragrohr in Anlage ist und sich zu diesem parallel erstreckt. Gleiches gilt für die Führungsschiene, die den Führungsschlitten mit den beiden Armschalenteilen trägt. Der Lagerbock ist bei einer Ausführungsform des erfindungsgemäßen Suchgerätes sowohl in Längsrichtung als auch in Umfangsrichtung des hinteren Rohrteils unbeweglich an dem hinteren Rohrende angeordnet. Bei einer anderen Ausführungsform ist der Lagerbock in Längsrichtung des hinteren Rohrteils unbeweglich und in Umfangsrichtung des hinteren Rohrteils lösbar verriegelt an dem hinteren Rohrende befestigt, so dass das Griffteil und die Führungsschiene mit dem Führungsschlitten und der daran angeordneten Armschale gegenüber dem Tragrohr bzw. der an dem vorderen Rohrteil schwenkbar befestigten Messsonde verdrehbar ist.

Bei einer bevorzugten Ausführungsform des erfindungsgemäßen Suchgerätes ist die Führungsschiene zwischen einer das hintere Rohrteil axial verlängernden Arbeitsstellung und einer parallel am hinteren Rohrteil anliegenden Ruhestellung verschwenkbar. Bei einer weiteren Ausführungsform des Suchgerätes ist das Griffteil zwischen einer vom hinteren Rohrteil quer abstehenden Arbeitsstellung und einer parallel am hinteren Rohrteil anliegenden Ruhestellung verschwenkbar.

Vorzugsweise ist bei einer Ausführungsform das Griffteil und/oder die Führungsschiene in der Arbeitsstellung über eine vorgesehene Verriegelung einzeln an dem Lagerbock lösbar fixierbar. Die Verriegelung betrifft zumindest die Arbeitsstellung des Griffteils und der Führungsschiene mit dem Führungsschlitten und der Armschale. Eine zusätzliche Verriegelung in der Ruhestellung kann optional vorgesehen sein. Die Verriegelung erfolgt dabei jeweils über korrespondierend ausgebildete bekannte und gebräuchliche Verriegelungselemente beliebiger Art. Weder in der Arbeitsstellung noch in der Ruhestellung sind das Griffteil und die Führungsschiene dabei direkt aneinander lösbar befestigt.

Bei einer anderen bevorzugten Ausführungsform sind das Griffteil und die Führungsschiene in der Arbeitsstellung über eine am Griffteil und/oder an der Führungsschiene vorgesehene Verriegelung aneinander lösbar befestigbar und damit gegenüber dem Lagerbock unbeweglich fixierbar. Die Verriegelung erfolgt dabei ebenfalls jeweils über korrespondierend ausgebildete bekannte und gebräuchliche Verriegelungselemente beliebiger Art. Beim Lösen der Verriegelung können sowohl das Griffteil und die Führungsschiene unabhängig voneinander verschwenkt werden. Eine zusätzliche Verriegelung in der Ruhestellung an dem Lagerbock kann optional vorgesehen sein.

In der Ruhestellung sind die Armanlageflügel in Richtung des Griffteils gerichtet und liegen beispielsweise an dem hinteren Tragrohr oder an der an diesem Tragrohr hinten angeordneten Elektronikeinheit und/oder dem Batteriefach seitlich an. Da das Tragrohr in der Nichtgebrauchsstellung des Suchgerätes zusammengeschoben ist und damit die Sonde an das hintere Rohrteil parallel seitlich angelegt werden kann, ergibt sich eine besonders kompakte Einheit für den Transport oder die Lagerung.

Nachfolgend wird die Erfindung anhand eines in der Zeichnung dargestellten Ausführungsbeispiels näher erläutert sein. Weitere Merkmale der Erfindung ergeben sich aus der folgenden Beschreibung des Ausführungsbeispiels der Erfindung in Verbindung mit den Ansprüchen und den beigefügten Figuren. Die einzelnen Merkmale der Erfindung können für sich allein oder zu mehreren bei unterschiedlichen Ausführungsformen des erfindungsgemäßen Suchgerätes verwirklicht sein. Es zeigen:
- Figur 1: ein erfindungsgemäßes Suchgerät an mit einer einem teleskopierbaren Tragrohr vorne befestigten Messsonde sowie mit an dem Tragrohr hinten angeordnetem Griffteil und Armschale, in der Gebrauchsstellung, in der das Griffteil und die Armschale in der Arbeitsstellung sind.
- Figur 2: das Suchgerät aus Figur 1 in der Nichtgebrauchsstellung, mit Griffteil und Armschale in der Ruhestellung;
- Figur 3: eine Ausschnittsvergrößerung des hinteren Abschnittes des Suchgerätes aus Figur 1, mit Griffteil und Armschalenteilen in Arbeitsstellung;
- Figur 4: die Ausschnittsvergrößerung gemäß Figur 3 mit in Richtung des Griffteils verschobenen Armschalenteilen in Arbeitsstellung;
- Figur 5: die Ausschnittsvergrößerung gemäß Figur 4 mit den Armschalenteilen in Ruhestellung;
- Figur 6: die Ausschnittsvergrößerung gemäß Figur 5 in einer Zwischenstellung zwischen der Arbeitsstellung und der Ruhestellungsstellung; und
- Figur 7: eine Detailansicht der Lagerung der Armschalenteile am Führungsschlitten.

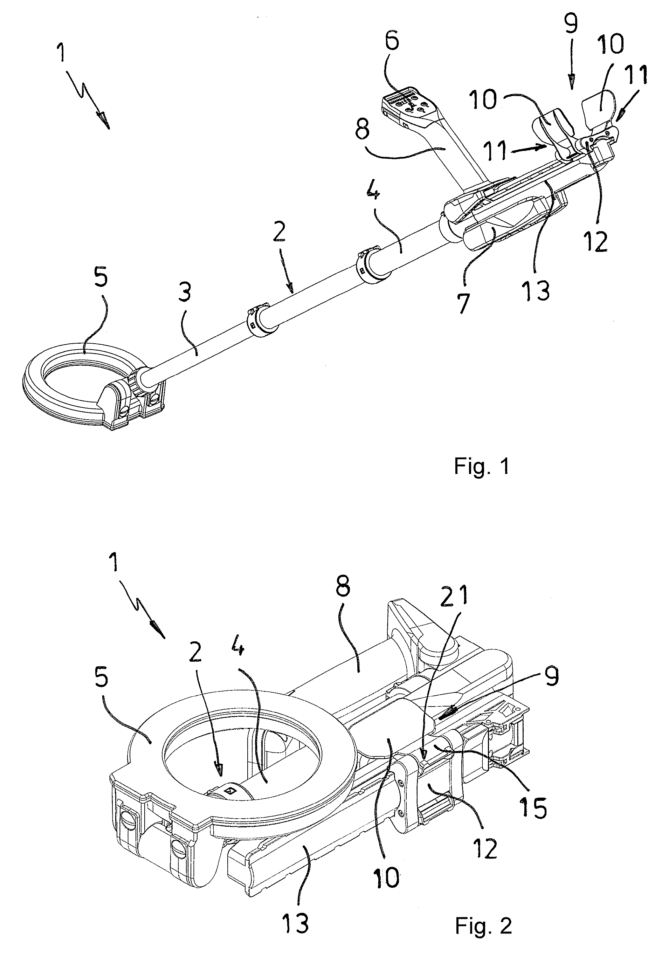

Figur 1 zeigt ein Ausführungsbeispiel eines erfindungsgemäßen Suchgerätes 1 in der Gebrauchsstellung. Das Suchgerät 1 weist ein teleskopierbares Tragrohr 2 mit mindestens einem vorderen Rohrteil 3 und einem hinteren Rohrteil 4 auf, wobei vorne an dem vorderen Rohrteil 3 eine Messsonde 5 schwenkbar befestigt ist und an dem hinteren Rohrteil 4 eine Elektronikeinheit 6, ein Batteriefach 7, ein Griffteil 8 und axial davon nach hinten beabstandet eine U-förmige Armschale 9 mit zwei Armanlageflügeln 10 angeordnet ist. Dabei ist die Armschale 9 gegenüber dem Griffteil 8 axial verschiebbar gelagert und weist zwei Armschalenteile 11 auf, die seitlich an einem Führungsschlitten 12 in Querrichtung des Tragrohres 2 schwenkbeweglich angeordnet sind. Der Führungsschlitten 12 ist von einer sich in Längsrichtung des Tragrohrs 2 erstreckenden Führungsschiene 13 axial verschiebbar getragen, die an einem hinteren Rohrende 14 des hinteren Rohrteils 4 befestigt ist.

Die Figur 2 zeigt das vorstehend beschriebene Suchgerät 1 in einer Nichtgebrauchsstellung, bei der das Griffteil 8 und die Führungsschiene 13 mit dem Führungsschlitten 12 und der Armschale 9 in einer Ruhestellung angeordnet sind. In der dargestellten Ruhestellung ist das Griffteil 8 und die Führungsschiene 13 in Richtung des hinteren Rohrteils 4 geklappt und erstrecken sich jeweils parallel zu diesem. Das teleskopierbare Tragrohr 2 ist zusammengeschoben, so dass das hintere Rohrteil 4 das vordere Rohrteil 3 vollständig übergreift. Die am vorderen Rohrteil 3 schwenkbar befestigte Messsonde 5 ist ebenfalls in Richtung des hinteren Rohrteils 4 umgeklappt und erstreckt sich parallel zu dem Tragrohr 2 anliegend an dem hinteren Rohrteil 4. Die Armschalenteile 11 sind gegenüber der in der Figur 1 gezeigten Gebrauchsstellung des Suchgerätes 1 von der Arbeitsstellung in eine Ruhestellung geschwenkt, bei der die Armanlageflügel 10 in Richtung des umgeklappten Griffteils 8 weisen.

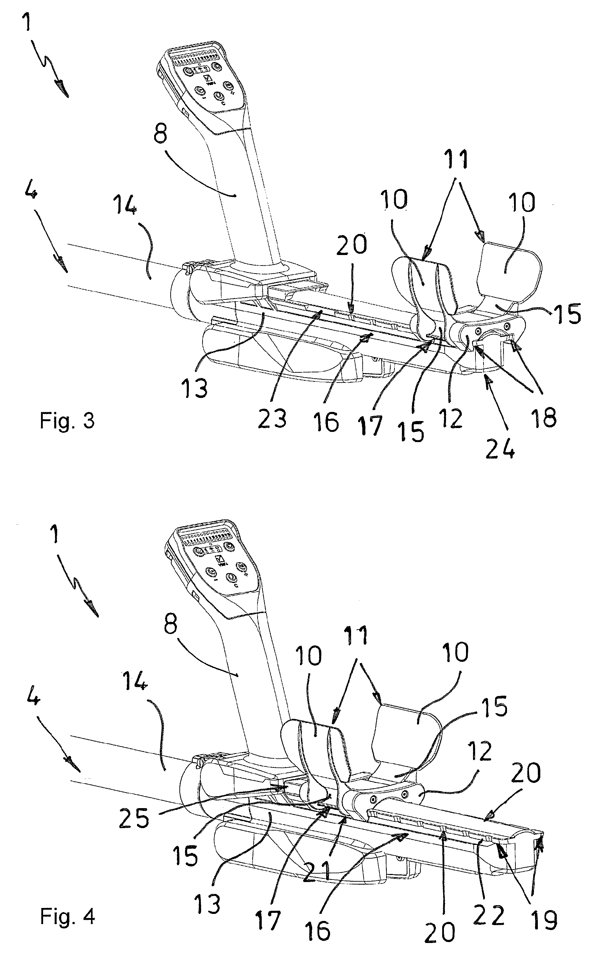

Die Figuren 3 bis 6 zeigen Ausschnittsvergrößerungen eines hinteren Abschnittes des Suchgerätes 1, der das hintere Rohrendes 14 des hinteren Rohrteils 4 mit dem daran schwenkbeweglich angeordneten Griffteil 8 und mit der daran schwenkbar befestigten Führungsschiene 13 umfasst, mit verschiedenen Stellungen des Führungsschlittens 12 und der Armschalenteile 11. In diesen Figuren ist zu erkennen, dass die Armschalenteile 11 je einen Armanlageflügel 10 mit einem Flügelfortsatz 15 aufweisen, über den die Armschalenteile 11 seitlich an dem Führungsschlitten 12 schwenkbar befestigt sind. Des Weiteren verdeutlichen diese Figuren, dass die Führungsschiene 13 eine rechteckige Querschnittsform mit zwei seitlichen Schienenlängsseiten 16 und der Führungsschlitten 12 zwei seitliche Schlittenlängsseiten 17 aufweist, die sich jeweils in Längsrichtung des Tragrohres 2 erstrecken und aneinander in Anlage sind. Dabei weisen die Schlittenlängsseiten 17 je eine Längsnut 18 zur Aufnahme eines Längsstegs 19 auf, der jeweils an den Schienenlängsseiten 16 der Führungsschiene 13 ausgebildet ist. Die Figuren 3 bis 6 verdeutlichen auch, dass der Führungsschlitten 12 an der Führungsschiene 13 mittels der Armschalenteile 11 an verschiedenen Stellen lösbar fixierbar ist.

Dazu weisen die Schienenlängsseiten 17 eine Anzahl von ersten Verriegelungsquernuten 20 auf, die schmaler als die Flügelfortsätze 15 ausgebildet sind. An den Flügelfortsätzen 15 sind jeweils zwei Rastvorsprünge 21 angeordnet, die bei Eingriff in die ersten Verriegelungsquernuten 20 der Führungsschiene 13 den Führungsschlitten 12 axial an der Führungsschiene 13 verriegeln, wobei neben den Verriegelungsquernuten 20 Bewegungsanschläge 22 für die Armschalenteile 11 angeordnet sind, die den Schwenkwinkel der Armschalenteile 11 begrenzen. Die Bewegungsanschläge 22 werden bei dem dargestellten Ausführungsbeispiel von Teilen des Längsstegs 19 gebildet. Diese verhindern ein Umklappen der Armanlageflügel 11 von der in den Figuren 3 und 4 gezeigten Arbeitsstellung in die in der Figur gezeigten Ruhestellung. Die ersten Verriegelungsquernuten 20 weisen einen identischen Abstand zueinander auf, der dem Abstand der beiden an dem Flügelfortsatz 15 angeordneten Rastvorsprünge 21 entspricht.

Neben den ersten Verriegelungsquernuten 20 weisen die Schienenlängsseiten 16 je eine zweite Verriegelungsquernut 23 auf, die entsprechend der Breite der Flügelfortsätze 15 ausgebildet sind. Damit ist der Schwenkwinkel der Armschalenteile 11 nicht durch die Bewegungsanschläge 22 begrenzt, so dass die Armschalenteile 11 in die entgegengesetzte Richtung von der Arbeitsstellung in die Ruhestellung umklappbar sind. Dabei sind die Flügelfortsätze 15 im Eingriff in die zweiten Verriegelungsquernuten 23 der Führungsschiene 13 und verriegeln den Führungsschlitten 12 axial an der Führungsschiene 13.

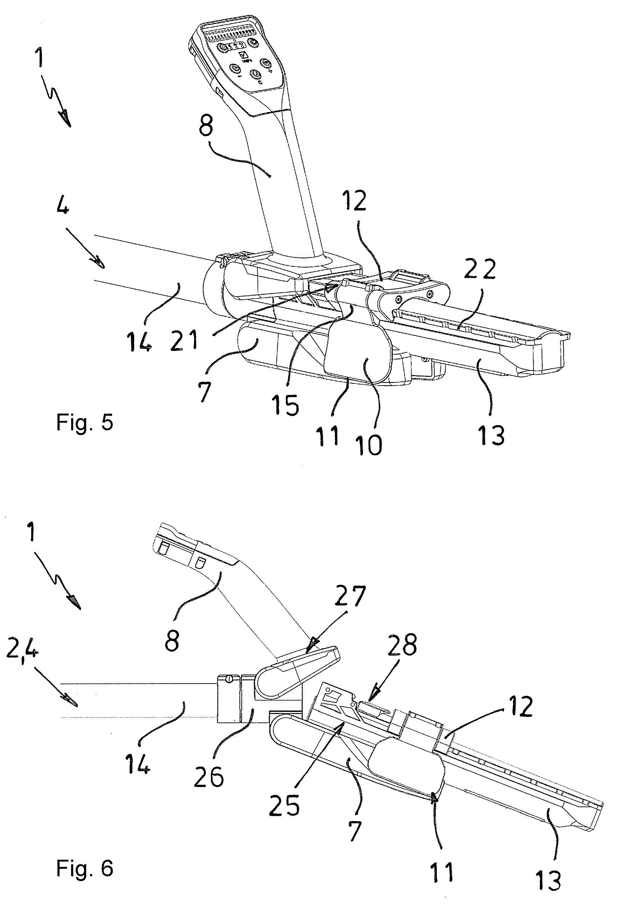

Die Figur 3 zeigt den Führungsschlitten 12 angeordnet an einem hinteren Ende 24 der Führungsschiene 13, wobei die Rastvorsprünge 21 der Flügelfortsätze 15 in zwei der ersten Verriegelungsquernuten 20 eingreifen. Die Figur 4 zeigt den Führungsschlitten 12 mit den Armschalenteilen 11 in Richtung eines vorderen Endes 25 der Führungsschiene 13 verschoben, wobei die Rastvorsprünge 21 außer Eingriff mit den ersten Verriegelungsnuten 20 sind. Die Figur 4 zeigt, wie die Figur 3, die Armschalenteile in der Arbeitsstellung. Die Figur 5 zeigt den Führungsschlitten 12 in einer Stelle der Führungsschiene 13, in der die Flügelfortsätze 15 jeweils mit den zweiten Verriegelungsnuten 23 fluchten. Die Armschalenteile 11 sind aus der Arbeitsstellung, bei der sich die Armanlageflügel 10 in gleicher Richtung wie das Griffteil 8 erstrecken, in die entgegengesetzte Richtung um 180° verschwenkt. Die Flügelfortsätze 15 erstrecken sich jetzt entgegen der Richtung des Griffteils 8 und liegen flachseitig an dem Batteriefach 7 an.

Die Figur 6 zeigt, dass das Griffteil 8 und die Führungsschiene 13 schwenkbeweglich an dem hinteren Rohrende 14 des hinteren Rohrteils 4 über je ein in der Abbildung nicht sichtbares Schwenkgelenk schwenkbar aneinander befestigt sind. Dazu ist an dem hinteren Rohrende 14 ein Lagerbock 26 unbeweglich befestigt, an dem die Führungsschiene 13 mit dem zum Tragrohr 2 weisenden vorderen Schienenende 25 und das Griffteil 8 mit einem zum Tragrohr 2 weisenden hinteren Griffende 27 schwenkbar verbunden sind. Dies ermöglicht, wie in der Figur 2 dargestellt, die den Führungsschlitten 12 mit den Armschalenteilen 11 tragende Führungsschiene 13 zwischen einer das hintere Rohrteil 4 axial verlängernden Arbeitsstellung in eine parallel am hinteren Rohrteil 4 anliegende Ruhestellung und das Griffteil 8 zwischen einer vom hinteren Rohrteil 4 quer abstehenden Arbeitsstellung in die parallel am hinteren Rohrteil 4 anliegende Ruhestellung zu schwenken. Das Griffteil 8 und die Führungsschiene 13 können in der Arbeitsstellung des Griffteils 8 und der Führungsschiene 13 über eine an der Führungsschiene 13 vorgesehene Verriegelung 28 aneinander lösbar befestigt werden und damit gegenüber dem Lagerbock 26 unbeweglich fixiert werden. Die Verriegelung 28 greift lösbar formschlüssig in das hintere Griffende 27 des Griffteils 8 lösbar ein. Der Figur 6 kann auch entnommen werden, dass in dem dargestellten Ausführungsbeispiel die Führungsschiene 13 indirekt über das Batteriefach 7 mit dem Lagerbock 6 verbunden ist. Alternativ kann eine direkte Verbindung der Führungsschiene 13 mit dem Lagerbock 26 vorgesehen sein.

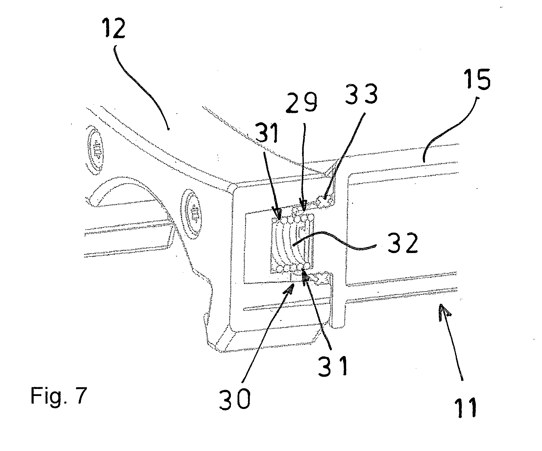

Die Figur 7 zeigt in einer Detailansicht die Lagerung der Armschalenteile 11 am Führungsschlitten 12. Demnach weisen die Flügelfortsätze 15 beidseitig einen zylindrischen Lagerzapfen 29 auf, der sich in eine zugeordnete zylindrische Lagerbuchse 30 des Führungsschlittens 12 erstreckt. Der Lagerzapfen 29 sowie die Lagerbuchse 30 weisen jeweils eine topfförmige Aufnahmekammer 31 für eine als gewundene Torsionsfeder ausgebildete Feder 32 auf. Jeder Flügelfortsatz 15 ist beidseitig mit einem derartigen Lagerzapfen 29 versehen, der in eine zugeordnete sich axial erstreckende Lagerbuchse 30 des Führungsschlittens 12 axial eingreift. Die Feder 32 kann beidseitig oder einseitig des Flügelfortsatzes 15 angeordnet sein. Die Feder 32 ist derart vorgespannt und angeordnet, dass sie die beiden Armschalenteile 11 mit einer Federkraft beaufschlagt, die die Armanlageflügel 10 spreizt. Zwischen den Lagerzapfen 29 und den Lagerbuchsen 30 ist jeweils ein Dämpfungsring 33 angeordnet, die die Bewegung der Flügelfortsätze 15 beim Erreichen der Ruhestellung dämpfen.

## Patentansprüche

1. Suchgerät (1) mit einem teleskopierbaren Tragrohr (2), mit mindestens einem vorderen Rohrteil (3) und einem hinteren Rohrteil (4), wobei vorne an dem vorderen Rohrteil (3) eine Messsonde (5) schwenkbar befestigt ist und an dem hinteren Rohrteil (4) eine Elektronikeinheit (6) mit Batteriefach (7), ein Griffteil (8) und axial davon nach hinten beabstandet eine U-förmige Armschale (9) angeordnet sind, und wobei die Armschale (9) gegenüber dem Griffteil (8) axial verschiebbar ist und zwei Armschalenteile (11) mit jeweils einem Armanlageflügel (10) aufweist, die seitlich an einem Führungsschlitten (12) in Querrichtung des Tragrohrs (2) schwenkbeweglich gelagert angeordnet sind, der von einer an einem hinteren Rohrende (14) des hinteren Rohrteils (4) befestigten sich in Längsrichtung des Tragrohrs (2) erstreckende Führungsschiene (13) axial verschiebbar getragen ist, wobei die Armanlageflügel (10) mit einem Flügelfortsatz (15) ausgebildet sind, über den die Armschalenteile (11) an dem Führungsschlitten (12) befestigt sind, **dadurch gekennzeichnet, dass** die Führungsschiene (13) eine unrunde Querschnittsform mit zwei seitlichen Schienenlängsseiten (16) und der Führungsschlitten (12) zwei seitliche Schlittenlängsseiten (17) aufweist, die sich jeweils in Längsrichtung des Tragrohres (2) erstrecken und aneinander in Anlage sind, und die Schlittenlängsseiten (17) zumindest eine Längsnut (18) zur Aufnahme der Schienenlängsseiten (16) der Führungsschiene (13) aufweisen, und wobei der Führungsschlitten (12) gegenüber der Führungsschiene (13) in Umfangsrichtung des hinteren Rohrteils (4) unverdrehbar und an der Führungsschiene (13) mittels der Armschalenteile (11) an verschiedenen Stellen lösbar fixierbar ist.

2. Suchgerät nach Anspruch 1, **dadurch gekennzeichnet, dass** die beiden Armschalenteile (11) mittels mindestens einer Feder (32) Kraft beaufschlagt sind, die die Armanlageflügel (10) spreizt.

3. Suchgerät nach Anspruch 1 oder 2, **dadurch gekennzeichnet, dass** die Schienenlängsseiten (16) eine Anzahl von Verriegelungsquernuten (20) aufweisen, die schmaler als oder gleich wie die Flügelfortsätze (15) ausgebildet sind, und an den Flügelfortsätzen (15) jeweils zumindest ein zugeordneter Rastvorsprung (21) angeordnet ist, die bei Eingriff in die Verriegelungsquernuten (20) der Führungsschiene (13) den Führungsschlitten (12) axial an der Führungsschiene (13) verriegeln, wobei neben und/oder in den Verriegelungsquernuten (20) jeweils mindestens ein Bewegungsanschlag (22) für die Armschalenteile (11) angeordnet sind, die den Schwenkwinkel der Armschalenteile (11) begrenzen und ein Umklappen der Armanlageflügel (10) in die entgegengesetzte Richtung verhindern.

4. Suchgerät nach einem der vorstehenden Ansprüche, **dadurch gekennzeichnet, dass** die Schienenlängsseiten (16) je eine Verriegelungsquernut (23) aufweisen, die gleich wie oder breiter als die Flügelfortsätze (15) ausgebildet sind, und der Schwenkwinkel der Armschalenteile (11) nicht durch Bewegungsanschläge begrenzt ist, sodass die Armschalenteile (11) in die entgegengesetzte Richtung umklappbar sind, wobei die Flügelfortsätze (15) bei Eingriff in die Verriegelungsquernuten (23) der Führungsschiene (13) den Führungsschlitten (12) axial an der Führungsschiene (13) verriegeln.

5. Suchgerät nach einem der vorstehenden Ansprüche 3 oder 4, **dadurch gekennzeichnet, dass** die Führungsschiene (13) an den Schienenlängsseiten (16) mindestens einen Längssteg (19) aufweist, der der mindestens einen an den Schlittenlängsseiten (17) vorgesehenen Längsnut (18) des Führungsschlittens (12) zugeordnet ist, wobei die Verriegelungsquernuten (20, 23) und/oder die Bewegungsanschläge (22) an dem Längssteg (19) ausgebildet sind.

6. Suchgerät nach einem der vorstehenden Ansprüche, **dadurch gekennzeichnet, dass** an dem hinteren Rohrende (14) des hinteren Rohrteils (4) ein Lagerbock (26) befestigt ist, mit dem die Führungsschiene (13) mit einem zum Tragrohr weisenden vorderen Schienenende (25) und/oder das Griffteil (8) mit einem zum Tragrohr weisenden hinteren Griffende (27) gelenkig verbunden ist.

7. Suchgerät nach Anspruch 6, **dadurch gekennzeichnet, dass** die Führungsschiene (13) zwischen einer das hintere Rohrteil (4) axial verlängernden Arbeitsstellung und einer parallel am hinteren Rohrteil (4) anliegenden Ruhestellung verschwenkbar ist.

8. Suchgerät nach Anspruch 6, **dadurch gekennzeichnet, dass** das Griffteil (8) zwischen einer vom hinteren Rohrteil (4) quer abstehenden Arbeitsstellung und einer parallel am hinteren Rohrteil (4) anliegenden Ruhestellung verschwenkbar ist.

9. Suchgerät nach einem der vorstehenden Ansprüche 6 bis 8, **dadurch gekennzeichnet, dass** jeweils das Griffteil (8) und/oder die Führungsschiene (13) in der Arbeitsstellung über eine vorgesehene Verriegelung (28) einzeln an dem Lagerbock (26) lösbar fixierbar ist.

10. Suchgerät nach einem der vorstehenden Ansprüche 6 bis 8, **dadurch gekennzeichnet, dass** das Griffteil (8) und die Führungsschiene (13) in der Arbeitsstellung über eine am Griffteil (8) und/oder an der Führungsschiene (13) vorgesehene Verriegelung aneinander lösbar befestigbar und damit gegenüber dem Lagerbock (26) unbeweglich fixierbar sind.

11. Suchgerät nach einem der vorstehenden Ansprüche 2 bis 10, **dadurch gekennzeichnet, dass** die auf die Armschalenteile (11) einwirkende Feder (32) eine gewundene Torsionsfeder ist.

## Claims

1. Detector (1), comprising a telescoping support tube (2), including at least one forward tube element (3) and a rear tube element (4), wherein a measuring probe (5) is pivotably attached at the at least one forward tube element (3) and an electronics unit (6) with a battery compartment (7), a handle element (8) and axially offset therefrom in rearward direction an U-shaped arm shell (9) with two arm support bars (10) are attached at the rear tube element (4), and wherein the arm shell (9) is axially moveable relative to the handle element (8) and comprises two arm shell elements (11), which are laterally arranged at a support slide (12) so that the two arm shell elements are pivotably moveable in a transversal direction of the support tube (2), wherein the support slide (12) is supported axially moveable at a support rail (13) attached at a rear tube end (14) of the rear tube element (4), wherein the support rail (13) extends in the longitudinal direction of the support tube (2), and wherein the arm shell elements (11) respectively include an arm support bar (10) with a bar extension (15), wherein the bar extensions attaches the arm shell elements (11) at the support slide (12), **characterized in that** the support rail (13) has a non-round cross sectional shape with two lateral longitudinal rail sides (16) and the support slide (12) includes two lateral longitudinal slide sides (17) which respectively extend in a longitudinal direction of the support tube (2) and contact each other, and wherein the longitudinal slide sides (17) include at least one longitudinal groove (18) for receiving the longitudinal rail sides (16) of the support rail (13), and wherein the support slide (12) is fixable in a disengageable manner at the support rail (13) through the arm shell elements (11) at various locations.

2. Detector according to claim 1, **characterized in that** the two arm shell elements (11) are force loaded by at least one spring (32) which spreads the arm support bars (10).

3. Detector according to claim 1 or 2, **characterized in that** the longitudinal rail sides (16) include a plurality of transversal locking grooves (20) which are configured smaller than or with identical width as the bar extensions (15) and at least one associated interlocking protrusion (21) is respectively arranged at the bar extensions (15), wherein the at least one associated interlocking protrusion interlocks the support slide (12) axially at the support rail (13) when the at least one associated interlocking protrusion (12) engages the transversal locking grooves (20) of the support rail (13), wherein at least one movement stop (22) for the arm shell elements (11) is respectively arranged adjacent to and/or in the transversal locking grooves (20), wherein the at least one movement stop (22) limits a pivot angle of the arm shell elements (11) and prevents a foldover of the arm support bars (10) in the opposite direction.

4. Detector according to one of the preceding claims, **characterized in that** the longitudinal rail sides (16) respectively comprise a transversal locking groove (23) which is configured with identical width or wider than the bar extensions (15) and a pivot angle of the arm shell elements (11) is not limited by movement stops so that the arm shell elements (11) are pivotable into an opposite direction, wherein the bar extensions (15) lock the support slide (12) axially at the support rail (13) when the bar extensions (15) engage the transversal locking grooves (23) of the support rail (13).

5. Detector according to one of the preceding claims 3 or 4, **characterized in that** the support rail (13) comprises at least one longitudinal bar (19) at the longitudinal rail sides (16), wherein the at least one longitudinal bar (19) is associated with the at least one longitudinal groove (18) of the support slide (12) arranged at at least one of the two longitudinal slide sides (17) of the support slide, and wherein the transversal locking grooves (20, 23) and/or the movement stops (22) are configured at the longitudinal bar (19).

6. Detector according to one of the preceding claims, **characterized in that** a support block (26) is attached at a rear tube end (14) of the rear tube element (4), wherein the support rail (13) is pivotably linked at the support block with a forward rail end (25) oriented towards the support tube and/or the handle element (8) is pivotably linked at the support block with a rear handle element (27) oriented towards the support tube.

7. Detector according to claim 6, **characterized in that** the support rail (13) is pivotable between an operating position axially extending the rear tube element (4) and an idle position contacting the rear tube element (4) in parallel.

8. Detector according to claim 6, **characterized in that** the handle element (8) is pivotable between an operating position transversally extending from the rear tube element (4) and an idle position contacting the rear tube element (4) in parallel.

9. Detector according to at least one of the preceding claims 6 through 8, **characterized in that** the handle element (8) and/or the support rail (13) are individually fixable at the support block (26) in a disengageable manner in the operating position through a locking device (28).

10. Detector according to at least one of the preceding claims 6 through 8, **characterized in that** the handle element (8) and the support rail (13) are attachable at each other in a disengageable manner in the operating position through an interlocking device arranged at the handle element (8) and/or at the support rail (13) so that the handle element and the support rail are fixable relative to the support block (26).

11. Detector according to one of the preceding claims 2 through 10, **characterized in that** the at least one spring (32) impacting the arm shell elements (11) is a wound torsion spring.

## Revendications

1. Détecteur (1) avec un tube porteur télescopique (2), présentant au moins une partie avant de tube (3) et une partie arrière de tube (4), une sonde de mesure (5) étant fixée de manière pivotante à l'avant sur la partie avant de tube (3) et une unité électronique (6) avec compartiment de batterie (7), une partie poignée (8) et, à distance axiale de celle-ci vers l'arrière, un repose-bras (9) en forme de U avec deux ailes d'appui de bras (10) étant disposés sur la partie arrière de tube (4), et le repose-bras (9) étant mobile axialement par rapport à la partie poignée (8) et présentant deux parties de repose-bras (11) comportant chacune une aile d'appui de bras (10), qui sont montées latéralement de manière à pouvoir pivoter dans la direction transversale du tube porteur (2) sur un chariot de guidage (12) qui est porté de manière mobile axialement par un rail de guidage (13) fixé à une extrémité arrière de tube (14) de la partie arrière de tube (4) et s'étendant dans la direction longitudinale du tube porteur (2), les ailes d'appui de bras (10) étant formées avec un prolongement d'aile (15) par lequel les parties de repose-bras (11) sont fixées au chariot de guidage (12),
**caractérisé en ce que** le rail de guidage (13) présente une forme de section transversale non circulaire avec deux côtés longitudinaux de rail (16) latéraux et le chariot de guidage (12) deux côtés longitudinaux de chariot (17) latéraux qui s'étendent chaque fois dans la direction longitudinale du tube porteur (2) et sont appliqués les uns contre les autres, et les côtés longitudinaux de chariot (17) présentent au moins une rainure longitudinale (18) pour recevoir les côtés longitudinaux de rail (16) du rail de guidage (13), le chariot de guidage (12) pouvant être fixé sans possibilité de rotation dans la direction circonférentielle de la partie arrière de tube (4) par rapport au rail de guidage (13) et de manière détachable à différents endroits sur le rail de guidage (13) au moyen des parties de repose-bras (11).

2. Détecteur selon la revendication 1, **caractérisé en ce que** les deux parties de repose-bras (11) sont soumises au moyen d'au moins un ressort (32) à une force qui écarte les ailes d'appui de bras (10).

3. Détecteur selon la revendication 1 ou 2, **caractérisé en ce que** les côtés longitudinaux de rail (16) présentent un certain nombre de rainures transversales de verrouillage (20) qui sont plus étroites ou de même largeur que les prolongements d'aile (15), et sur chacun des prolongements d'aile (15) est disposée au moins une saillie d'enclenchement (21) associée, qui, lorsqu'elles s'engagent dans les rainures transversales de verrouillage (20) du rail de guidage (13) verrouillent le chariot de guidage (12) axialement sur le rail de guidage (13), chaque fois au moins une butée de déplacement (22) pour les parties de repose-bras (11) étant disposée à côté et/ou dans les rainures transversales de verrouillage (20), qui limitent l'angle de pivotement des parties de repose-bras (11) et empêchent un rabattement des ailes d'appui de bras (10) dans la direction opposée.

4. Détecteur selon l'une des revendications précédentes, **caractérisé en ce que** les côtés longitudinaux de rail (16) présentent chacun une rainure transversale de verrouillage (23) qui est de même largeur ou plus large que les prolongements d'aile (15), et l'angle de pivotement des parties de repose-bras (11) n'est pas limité par des butées de déplacement, de sorte que les parties de repose-bras (11) sont rabattables dans la direction opposée, les prolongements d'aile (15) verrouillant le chariot de guidage (12) axialement sur le rail de guidage (13) lorsqu'ils s'engagent dans les rainures transversales de verrouillage (23) du rail de guidage (13).

5. Détecteur selon l'une des revendications précédentes 3 ou 4, **caractérisé en ce que** le rail de guidage (13) présente sur les côtés longitudinaux de rail (16) au moins une nervure longitudinale (19) qui est associée à ladite au moins une rainure longitudinale (18) du chariot de guidage (12) prévue sur les côtés longitudinaux de chariot (17), les rainures transversales de verrouillage (20, 23) et/ou les butées de déplacement (22) étant formées sur la nervure longitudinale (19).

6. Détecteur selon l'une des revendications précédentes, **caractérisé en ce que** sur l'extrémité arrière de tube (14) de la partie arrière de tube (4) est fixé un support formant palier (26) servant à relier de manière articulée le rail de guidage (13) à une extrémité avant de rail (25) dirigée vers le tube porteur et/ou la partie poignée (8) à une extrémité arrière de poignée (27) dirigée vers le tube porteur.

7. Détecteur selon la revendication 6, **caractérisé en ce que** le rail de guidage (13) peut pivoter entre une position de travail prolongeant axialement la partie arrière de tube (4) et une position de repos appliquée parallèlement contre la partie arrière de tube (4).

8. Détecteur selon la revendication 6, **caractérisé en ce que** la partie poignée (8) peut pivoter entre une position de travail faisant saillie transversalement de la partie arrière de tube (4) et une position de repos appliquée parallèlement contre la partie arrière de tube (4).

9. Détecteur selon l'une des revendications précédentes 6 à 8, **caractérisé en ce que** dans la position de travail, la partie poignée (8) et/ou le rail de guidage (13) peuvent être fixés de manière détachable individuellement sur le support formant palier (26) au moyen d'un verrouillage (28) prévu.

10. Détecteur selon l'une des revendications précédentes 6 à 8, **caractérisé en ce que** dans la position de travail, la partie poignée (8) et le rail de guidage (13) peuvent être fixés de manière détachable l'un à l'autre et donc sans possibilité de déplacement par rapport au support formant palier (26) au moyen d'un verrouillage prévu sur la partie poignée (8) et/ou sur le rail de guidage (13).

11. Détecteur selon l'une des revendications précédentes 2 bis 10, **caractérisé en ce que** le ressort (32) agissant sur les parties de repose-bras (11) est un ressort de torsion torsadé.
